# EUROPEAN PATENT SPECIFICATION

(11) **EP 1 731 025 B1**
(45) Date of publication and mention of the grant of the patent: **17.07.2013**
(21) Application number: 06380149.2
(22) Date of filing: 31.05.2006
(51) Int. Cl.: A01G 27/04, A01G 9/02

(54) **Sectional container for watering plants**
Zusammensetzbarer Behälter zur Pflanzenbewässerung
Réceptacle démontable pour l'irrigation de plantes

(30) Priority: 03.06.2005 ES 200501328
(43) Date of publication of application: 13.12.2006
(73) Proprietor: Hobby-Flower De España, S.A., 08007 Barcelona (ES)
(72) Inventor: Cabré Roigé, Luis, 08037 Barcelona (ES)
(74) Representative: Morgades y Manonelles, Juan Antonio

(56) References cited:
- EP-A- 0 692 186
- DE-A1- 2 043 199
- DE-U1- 8 511 467
- GB-A- 2 393 889

## Description

The present invention relates to a sectional container for the automatic watering of plants, providing correct and uniform watering at all times of the plant arranged in the container.

The present invention therefore provides significant novelty and inventive step compared to the currently known plants.

For instance, there are arrangements for plant pots as can be seen in the German utility model n° 8511467.7, with the priority date of 18.04.85.

In particular, the sectional container according to the present invention can be dismantled and has a watering system based on the presence of capillary lines, of which the ends are designed to be inserted in the irrigation liquid, the irrigation water stored in a lower space of the container being transported by capillary action along each line to the planting soil in the container. Said watering system has numerous advantages, among which are that water is supplied in a manner that is uniform in space, continuous in time and comes from a zone below the plant, which therefore reproduces faithfully the watering conditions that most plants normally encounter in their natural environment.

More particularly, the sectional container according to the present invention has at least two capillary lines arranged in such a way that the ends of said two capillary lines are situated in a lower space of the sectional structure of the container, for receiving the irrigation liquid. Said lines have at least one intermediate zone situated in the upper space of the sectional structure of the container for receiving the planting soil, said lines being in contact in said upper space. The partition wall may have a series of apertures through which said lines pass, intermediate zones of a line situated between a first aperture through which the line passes from the lower space to the upper zone and another aperture through which said line passes from the upper space to the lower space being defined for each line, it being possible for said intermediate zones of line to be in contact with said partition wall. Each intermediate zone of line is in contact with another intermediate zone belonging to a different line, along at least a portion of the length of the intermediate zone.

Through this system of multiple lines uniform watering of the plant is achieved even if, during assembly of the sectional container, one of the ends of the lines designed to be in contact with the irrigation water is accidentally trapped by the parts forming the container and does not make contact with the irrigation water. When one of the ends of a line does not make contact with the irrigation water, said line may not be uniformly moistened and the zone of influence of said end of the line may not be irrigated, and this may eventually lead to the plants planted in the container withering. By means of the sectional container according to the present invention the occurrence of a lack of irrigation in zones of the container due to the aforementioned is avoided, since said line is in contact with the remaining line or lines in the zone of the planting soil, so the zone of influence of said end not inserted in the irrigation substance receives irrigation water through the zone or zones in contact with another line or other lines, and said irrigation water is distributed by capillary action in a basically uniform manner along said zone of influence of said end not inserted in the irrigation substance.

Similarly, the probability of an end of a line not being inserted in the irrigation substance depends on the number of parts that form the sectional container. The present invention therefore provides for the container to have a minimum number of parts. In particular, the container according to the present invention may consist basically of a part which is open at an upper end and forms said upper and lower spaces, a part which forms said partition wall between the upper and lower spaces and an external protective part, made of metal, for example, which is placed on said open part. In addition, the container may comprise shafts for introducing the irrigation liquid in said lower space and for indicating the level of the irrigation liquid respectively.

To better understand the invention, the accompanying drawings of embodiments of the present invention are given as an explanatory but not limiting example.

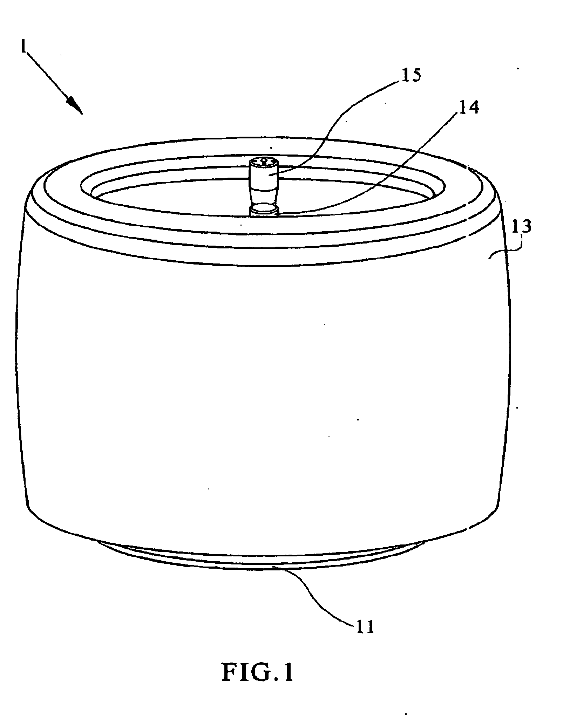

Fig. 1 is a perspective view of a container according to the present invention.

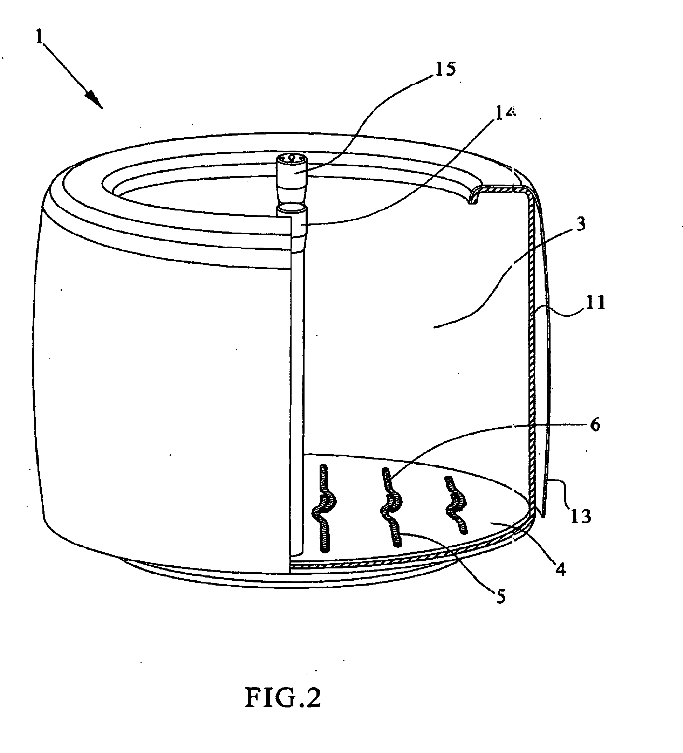

Fig. 2 is a perspective view of the container 1, in partial section to show the internal components.

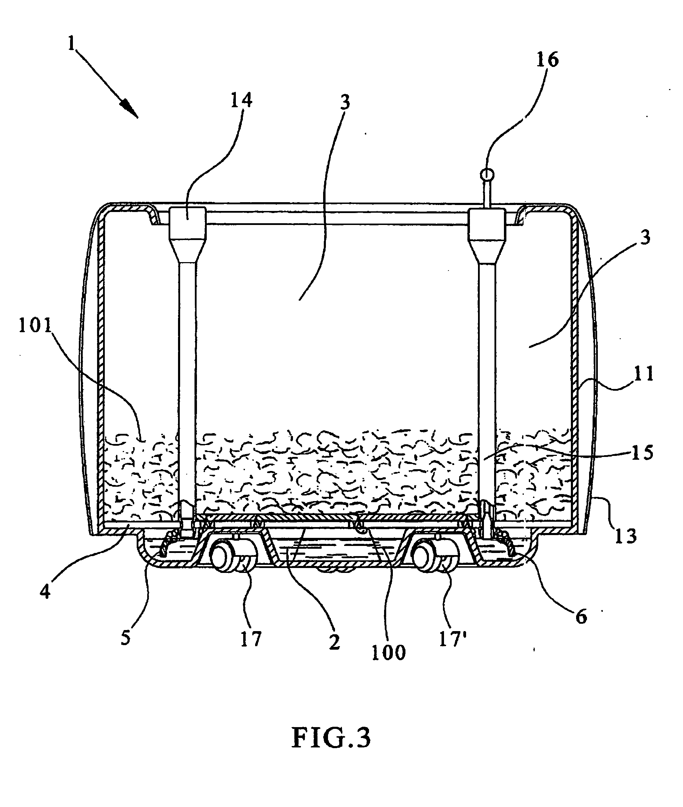

Fig. 3 is a sectional elevation showing the internal components of the container of Figs. 1 and 2.

Fig. 4 is a plan view from above of an example of the container according to the present invention shown in Figs. 1 to 3. In this figure a distribution of lines between an upper zone (shown by a solid line) and a lower zone (shown by a broken line) can be seen.

Fig. 5 is a detail in plan view from above of the contact that occurs between the capillary lines in a container according to the present invention.

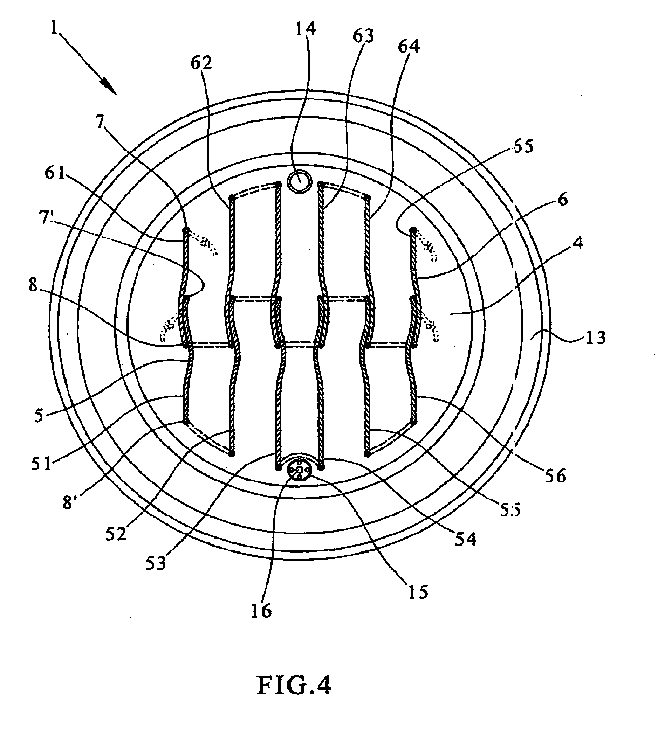

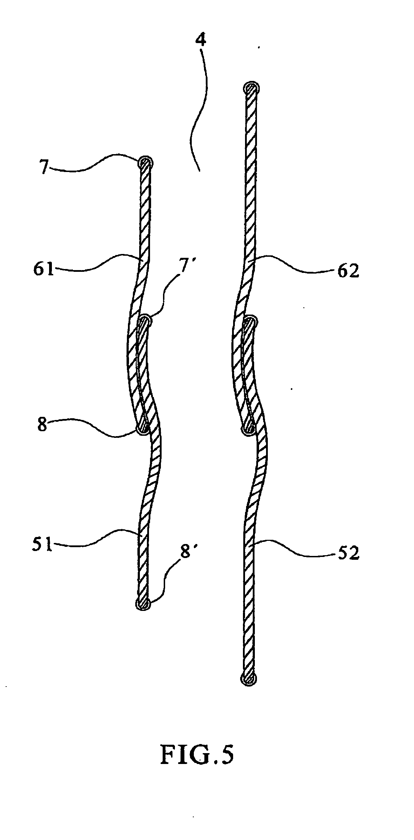

As can be seen in the figures, the container -1- according to the present invention comprises a sectional structure which defines a lower space -2- for receiving the irrigation liquid -100-, such as water for watering, and an upper space -3- for receiving the planting soil -101- for a plant, the two spaces being separated by a wall - 4-. The container has at least two capillary lines -5-, -6- of which the ends are situated in the lower space -2-, at least one intermediate zone of said lines -5-, -6-, such as for example the zones -51-, -52-, -53-, -54-, -55-, -56-, -61-, -62-, -63-, -64-, -65-, -66-, shown in Fig. 4, being situated in the upper space between respective first and second apertures -7-, -7'-; -8-, -8'- through which the lines -5-, -6- pass from the lower space -2-to the upper space -3-. The lines -5- and -6- are in contact in said upper space -3-, for example by arranging the lines -5-, -6- in such a way that each intermediate zone of a line -51-, -52-, -53-, -54-, -55-, -56- is in contact along a portion of the length of each intermediate zone with an intermediate zone -61-, -62-, -63-, -64-, -65-, -66-corresponding to the other line. See Figs. 4 and 5. Since the different lines remain in contact with each other, each line receives and transmits the irrigation liquid -100- not only through the ends of the lines -5-, -6- which may be submerged in an irrigation liquid mass, but also through the zones of contact with other lines in said intermediate zones, in such a way that if the end of a line is not submerged in the irrigation substance -100- the zone of influence of said line is suitably moistened through the zones of contact with the other lines.

Normally, said possibility that the end of a line is not submerged in the irrigation substance arises because said end of a line is caught on projections of the parts during the process of assembly of the sectional container. To minimise the risk of this occurring, the container should preferably be designed with the smallest possible number of parts. In the example shown, the container consists basically of an open part -11- which may be produced from a plastics material which forms said upper and lower spaces, a part -4-, for example also produced from plastics material, which forms the partition wall between the upper and lower spaces, and which is fitted in the aforementioned part -11- and in which the capillary lines -5-, -6- are arranged and an external protective and decorative part -13-, which may consist of a single part, for example, of stainless steel, which is fitted on the open part -11-. The container may also comprise two shafts -14-, -15-, which may for example be produced from plastics material, are fitted by mechanical means on the wall part -4- and serve as an aperture for filling the lower space -2- and for housing a float system -16- which indicates the level of the irrigation liquid -100- in the lower space -2-, respectively. The example shown also has wheels -17-, -17'- which may optionally be fitted to the lower face of the open part-11-.

## Claims

1. Sectional container (1) for watering plants, of the type comprising a sectional structure which defines a lower space (2) for receiving the watering liquid and an upper space (3) for receiving the planting soil, the two spaces being separated by a partition wall (4), while the container has inside capillary lines (5, 6) of which the ends are situated in the lower space, at least one intermediate zone of each of said lines being placed in said upper space, at least two of said lines being in contact in said upper space,
**characterised in that** the partition wall (4) has a series of apertures (7, 8) through which said lines pass, intermediate zones of a line situated between a first aperture through which the line passes from the lower space to the upper space and another aperture through which said line passes from the upper space to the lower space zone being defined for each line, and that each intermediate zone of a line is in contact with another intermediate zone of a different line , along at least a portion of the length of the intermediate zone.

2. Container, according to claim 1, **characterised in that** said intermediate zones are in contact with said partition wall.

3. Container, according to any of claims 1 to 2 **characterised in that** it comprises a part which is open at the upper end and forms said upper and lower spaces, a part which forms said partition wall between the upper and lower spaces and an external protective part placed on said open part.

4. Container, according to claim 3, **characterised in that** the external protective part is metallic.

5. Container, according to claim 3 or 4, **characterised in that** it comprises two shafts for introducing irrigation liquid into said lower space and for indicating the level of the irrigation liquid respectively.

6. Container, according to any one of claims 1 to 5, **characterised in that** it comprises wheels.

## Patentansprüche

1. Mehrteiliger Behälter (1) für die Bewässerung von Pflanzen, bestehend aus einer sektionsweise aufgebauten Konstruktion, die einen unteren Raum (2) zur Aufnahme der Bewässerungsflüssigkeit und einen oberen Raum (3) zur Aufnahme der Pflanzerde beschreibt, wobei diese beiden Räume durch eine Trennwand (4) voneinander getrennt sind, während der Behälter in seinem Inneren Kapillarleitungen (5, 6) aufweist, deren Enden im unteren Raum angeordnet sind, mindestens ein Zwischenbereich jeder dieser Leitungen im oberen Raum angeordnet ist und mindestens zwei dieser Leitungen eine Kontaktstelle im oberen Raum aufweisen, **dadurch gekennzeichnet, dass** die Trennwand (4) für jede der Leitungen eine Reihe von Öffnungen (7, 8) besitzt, durch welche die Leitungen hindurchführen, wobei sich die Zwischenbereiche einer Leitung zwischen einer ersten Öffnung, durch welche die Leitung vom oberen Raum zum unteren Raum hindurchführt, und einer weiteren Öffnung, durch welche die Leitung vom unteren Raum zum oberen Raum hindurchführt, befinden und wobei jeder Zwischenbereich einer Leitung mit einem anderen Zwischenbereich einer anderen Leitung entlang mindestens eines Teils der Länge des Zwischenbereiches in Kontakt ist.

2. Behälter nach Anspruch 1, **dadurch gekennzeichnet, dass** sich die Zwischenbereiche in Kontakt mit der Trennwand befinden.

3. Behälter nach einem der Ansprüche 1 und 2, **dadurch gekennzeichnet, dass** er einen Teil umfasst, der am oberen Ende offen ist und den oberen und unteren Raum bildet, einen Teil, der die Trennwand zwischen dem oberen und unteren Raum bildet, sowie ein äußeres Schutzteil, das über dem offenen Teil angeordnet ist.

4. Behälter nach Anspruch 3, **dadurch gekennzeichnet, dass** das äußere Schutzteil aus Metall ist.

5. Behälter nach Anspruch 3 oder 4, **dadurch gekennzeichnet, dass** er zwei Schächte zur Einleitung der Bewässerungsflüssigkeit in den unteren Raum bzw. zur Anzeige des Flüssigkeitsstandes umfasst.

6. Behälter nach einem der Ansprüche 1 bis 5, **dadurch gekennzeichnet, dass** er Rollen umfasst.

## Revendications

1. Conteneur démontable (1) pour irriguer des plantes, du type comprenant une structure démontable qui définit un espace inférieur (2) pour recevoir le liquide d'irrigation et un espace supérieur (3) pour recevoir la terre végétale, les deux espaces étant séparés par une paroi de division (4) alors que le conteneur a des lignes capillaires intérieures (5, 6) dont les extrémités sont placées dans l'espace inférieur, au moins une zone intermédiaire de chacune de ces lignes étant placée dans ledit espace supérieur, au moins deux desdites lignes étant en contact avec ledit espace supérieur, **caractérisé en ce que** la paroi de division (4) présente une série d'ouvertures (7, 8) à travers lesquelles lesdites lignes passent de l'espace inférieur à l'espace supérieur et une autre ouverture à travers laquelle ladite ligne passe de l'espace supérieur à l'espace inférieur défini pour chaque ligne, et que chaque zone intermédiaire d'une ligne est en contact avec une autre zone intermédiaire d'une ligne différente, le long d'au moins une portion de la longueur de la zone intermédiaire.

2. Conteneur, conformément à la revendication 1, **caractérisé en ce que** lesdites zones intermédiaires sont en contact avec ladite paroi de division.

3. Conteneur, conformément à n'importe laquelle des revendications 1 à 2, **caractérisé en ce qu'**il comprend une partie qui est ouverte à l'extrémité supérieure et forme lesdits espaces supérieur et inférieur, une partie qui forme ladite paroi de division entre les espaces supérieur et inférieur et une partie protectrice externe placée sur cette partie ouverte.

4. Conteneur, conformément à la revendication 3, **caractérisé en ce que** la partie protectrice externe est métallique.

5. Conteneur, conformément aux revendications 3 ou 4, **caractérisé en ce qu'**il comprend deux tiges pour introduire le liquide d'irrigation dans ledit espace inférieur et pour indiquer le niveau de liquide d'irrigation, respectivement.

6. Conteneur, conformément à n'importe laquelle des revendications 1 à 5, **caractérisé en ce qu'**il comprend des rouages.
